# EUROPÄISCHE PATENTANMELDUNG

(11) **EP 1 092 466 A2**
(43) Veröffentlichungstag der Anmeldung: **18.04.2001**
(21) Anmeldenummer: 00120886.7
(22) Anmeldetag: 26.09.2000
(51) Int. Cl.: B01D 53/94, F01N 3/20, C01C 1/02, C01C 1/08

(54) **Einrichtung zur Erzeugung eines gasförmigen Reduktionsmittels für die katalytische Reinigung von Abgasen eines Verbrennungsmotors**

(30) Priorität: 13.10.1999 DE 19949296
(71) Anmelder: FEV Motorentechnik GmbH, 52078 Aachen (DE)
(72) Erfinder: Lüers, Bernhard, Dr.-Ing., 52222 Stolberg (DE); Hernier, Markus, Dipl.-Ing., 41189 Mönchengladbach (DE); Gürich, Gunter, Dr.-Ing., 52074 Aachen (DE); Düsterhöft, Martin, Dipl.-Ing., 52070 Aachen (DE)
(74) Vertreter: Langmaack, Jürgen, Dipl.-Ing.

(57) **Zusammenfassung**

Die Erfindung betrifft eine Einrichtung zur Erzeugung eines gasförmigen Reduktionsmittels aus einem Reduktionsmittelpreßkörper (6) zur Einleitung in ein katalytisch zu reinigendes Abgas, mit einem druckdicht verschließbaren Aufnahmebehälter (5) für den Preßkörper (6), der im Bodenbereich mit einer Heizeinrichtung (7) und einem damit verbundenen Gassammelraum (8) versehen ist, mit einem an den Gassammelraum angeschlossenen Dosierventil (10), dessen Ventilöffnung in eine Reaktionskammer (11) zur thermischen Umsetzung des gasförmigen Reduktionsmittels in gasförmige reduktive Produkte mündet, die mit der Abgasleitung (1) in Verbindung steht.

## Beschreibung

Die katalytische Nachbehandlung von sauerstoffhaltigen Abgasen von Verbrennungsmotoren zur Reduzierung der NOₓ-Emission erfordert eine sogenannte selektive katalytische Reduktion, die es ermöglicht, im Abgas mit den Stickoxiden, d. h. NO und NO₂ molekularen Stickstoff (N₂), Kohledioxid (CO₂) und Wasser zu bilden, und zwar bei Dieselmotoren, aber auch bei Ottomotoren mit Kraftstoffdirekteinspritzung. Dies geschieht durch die Zufuhr von Reduktionsmitteln, die jedoch hinsichtlich der Zudosierung in den geforderten kleinen Mengen bei hoch dynamisch betriebenen Verbrennungsmotoren im mobilen Einsatz mit schwankendem Stickoxidausstoß schwierig ist.

Aus WO99/30811 ist nun ein Verfahren bekannt, bei dem ein als Feststoff vorliegendes Reduktionsmittel unter Wärmeeinwirkung in ein Reduktionsmittelgas verwandelt wird und das Reduktionsmittelgas danach in einer Reaktionskammer thermisch und/oder katalytisch in gasförmige reduktive Produkte zerlegt wird, die dann dem zu reduzierenden Abgas vor dem Katalysator zugemischt werden. Bei diesem Verfahren wird mit Vorteil ausgenutzt, daß eine Reihe von festen Reduktionsmitteln, in erster Linie Cyanursäure, in einer ersten Stufe durch Wärmezufuhr verdampft werden können, wobei der Übergang "Feststoff-Gas" durch Sublimation erfolgt. Bei diesem Vorgang wird das in Gasform überführte Reduktionsmittel jedoch noch nicht zersetzt. Durch weitere Wärmezufuhr oder durch eine katalytische Hydrolysereaktion wird dann in einer zweiten Stufe das Reduktionsmittelgas in gasförmige reduktive Produkte zerlegt, die in das zu reinigende Abgas eingeleitet und bei der Abgasreinigung im Katalysator wirksam werden. Während die in der ersten Stufe erfolgende Umsetzung Feststoff-Gas umkehrbar ist, d. h. bei Abkühlung das Reduktionsmittel unverändert wieder als Feststoff vorliegt, ist die in der zweiten Stufe erfolgende Zerlegung in gasförmige reduktive Produkte nicht mehr umkehrbar. Der besondere Vorteil des vorbekannten Verfahrens besteht vor allem darin, daß für den Betrieb das Reduktionsmittelgas dosiert wird und nur die zudosierte Gasmenge thermisch und/oder katalytisch druckfrei in gasförmige reduktive Produkte umgesetzt wird, zu denen insbesondere Ammoniak (NH₃) gehört.

Der Erfindung liegt nun die Aufgabe zugrunde, eine Einrichtung zu schaffen, die es erlaubt, das vorbekannte Verfahren für den Kraftfahrzeugebtrieb praktikabel umzusetzen.

Diese Aufgabe wird gemäß der Erfindung gelöst durch eine Einrichtung zur Erzeugung eines gasförmigen Reduktionsmittels aus einem Reduktionsmittelpreßkörper zur Einleitung in ein katalytisch zu reinigendes Abgas, mit einem druckdicht verschließbaren Aufnahmebehälter für den Preßkörper, der im Bodenbereich mit einer Heizeinrichtung und einem damit verbundenen Gassammelraum versehen ist, mit einem an den Gassammelraum angeschlossenes Dosierventil, dessen Ventilöffnung in eine Reaktionskammer zur thermisch/katalytischen Umsetzung des gasförmigen Reduktionsmittels in gasförmige reduktive Produkte mündet, die mit der Abgasleitung in Verbindung steht. Der Vorteil dieser Einrichtung besteht darin, daß als Vorrat des Reduktionsmittels, insbesondere Cyanursäure, ein kompakter Preßkörper verwendet wird, der an die Heizeinrichtung angedrückt wird, sei es durch sein Eigengewicht, sei es durch zusätzliche Andruckmittel. Bei einer vorzugsweise elektrischen Heizeinrichtung kann dann bei gegebener Heizleistung über die Heizdauer jeweils im Kontaktbereich zwischen Preßkörper und Heizeinrichtung dosiert Reduktionsmittel durch Sublimation in ein gasförmiges Reduktionsmittel umgesetzt werden. Das gasförmige Reduktionsmittel verbleibt jedoch unter geringem Druck von beispielsweise 0,5 bar im Aufnahmebehälter und kann aus diesem mit der von einer Steuerung abgeforderten Menge über das Dosierventil in die nachgeschaltete Reaktionskammer und damit nach seiner Umsetzung in gasförmige reduktive Produkte dosiert in das zu reinigende Abgas eingeleitet werden.

In vorteilhafter Ausgestaltung der Erfindung ist vorgesehen, daß die Heizeinrichtung eine beheizbare Bodenplatte aufweist, die wärmeleitend mit einer mit Durchtrittsöffnungen versehenen Kontaktfläche für den Preßkörper zumindest teilweise mit Abstand einen Gassammelraum bildend verbunden ist. Zweckmäßig ist es hierbei ferner, wenn die Oberfläche der Kontaktfläche größer ist als die Fläche der Bodenplatte. Dies kann beispielsweise durch eine Wellenstruktur in Form von konzentrischen Durchprägungen der Kontaktfläche oder von radial ausgerichteten dachförmigen Auffaltungen bewirkt werden.

In einer vorteilhaften Ausgestaltung der Erfindung ist vorgesehen, daß die Reaktionskammer durch eine Bypaßleitung zur Abgasleitung gebildet wird. Diese Anordnung bietet den Vorteil, daß über einen Teilstrom des zu reinigenden heißen Abgases zumindest ein Teil der für die Umsetzung des Reduktionsmittelgases in gasförmige reduktive Produkte benötigte Wärmemenge zur Verfügung steht. Auch das Druckgefälle für die Durchströmung der Bypaßleitung kann in einfacher Weise dadurch zur Verfügung gestellt werden, daß in der Abgasleitung zwischen der Abzweigung und der Einmündung der Bypaßleitung ein entsprechender Staukörper angeordnet wird, beispielsweise eine Blende oder ein Drallkörper.

In weiterer vorteilhafter Ausgestaltung der Erfindung ist vorgesehen, daß in der Bypaßleitung, vorzugsweise in Strömungsrichtung der Abgase gesehen, vor der Einmündung der Ventilöffnung eine Zusatzheizeinrichtung zur Aufheizung der Abgase zugeordnet ist. Hierdurch ist die Möglichkeit gegeben, beispielsweise schon in der Kaltstartphase die für die Umsetzung des gasförmigen Reduktionsmittels in gasförmige reduktive Produkte notwendige Wärmeenergie zuverlässig zur Verfügung zu stellen. Diese Zusatzheizeinrichtung kann aber auch dann von Vorteil sein, wenn die Umsetzung des gasförmigen Reduktionsmittels in gasförmige reduktive Produkte durch Pyrolyse erfolgt, für die eine höhere Temperaturlage erforderlich ist, als sie in vielen Betriebszuständen durch das zu reinigende Abgas gegeben ist.

In besonders vorteilhafter Ausgestaltung der Erfindung ist vorgesehen, daß in der Bypaßleitung - in Strömungsrichtung der Abgase gesehen - hinter der Einmündung der Ventilöffnung ein Hydrolyse-Katalysator angeordnet ist. Damit ist die Möglichkeit gegeben, in der durch die Bypaßleitung gebildeten Reaktionskammer auch bei niedriger Abgastemperatur den ohnehin im zu reinigenden Abgas enthaltenen Wassergehalt für eine hydrokatalytische Umsetzung des Reduktionsmittelgases in gasförmige reduktive Produkte auszunutzen. Eine in der Bypaßleitung vorgesehene Zusatzheizeinrichtung wird dann lediglich nötig, um die für die Hydrolysereaktion notwendige Mindesttemperatur von max. etwa 350°C einzustellen, während bei der Pyrolysereaktion eine Temperatur von mehr als 400°C erforderlich ist. Durch eine zusätzliche dosierte Zufuhr von Wasser zum Abgas, beispielsweise durch Zudüsung von Wasser, kann der Wassergehalt im Bereich der Reaktionskammer, hier der Bypaßleitung, noch angepaßt werden.

In weiterer Ausgestaltung der Erfindung ist vorgesehen, daß die Bypaßleitung zuflussseitig mit einem Pulsationsdämpfer versehen ist. Hierdurch wird das durch den Ladungswechsel der Kolbenbrennkraftmaschine in Schwingungen versetzt Abgas beruhigt.

In Ausgestaltung der Erfindung ist vorgesehen, daß der Aufnahmebehälter mit einer nach außen wirkenden Wärmeisolierung versehen ist. Hierdurch kann gewährleistet werden, daß innerhalb des Aufnahmebehälters im Betrieb eine Mindesttemperatur aufrechterhalten werden kann. Besonders zweckmäßig ist es hierbei, wenn der Aufnahmebehälter mit einer auf den Innenraum wirkenden Beheizung versehen ist. Diese Beheizung kann an der Innenwandung des Behälters und/oder als zusätzliches Einbauteil angeordnet sein.

Der Aufnahmebehälter weist zweckmäßigerweise eine Füllöffnung auf, die mit einem abnehmbaren Deckel dicht verschließbar ist, wobei ferner zweckmäßigerweise die Füllöffnung auf der der Heizeinrichtung abgekehrten Seite des Aufnahmebehälters angeordnet ist. Dies hat den Vorteil, daß die erforderliche Abdichtung zwischen Deckel und Behälter in genügendem Abstand zur Heizeinrichtung angeordnet ist und so die erforderlichen Dichtungen thermisch nicht überlastet werden. Ein weiterer Vorteil bei senkrechter Anordnung des Aufnahmebehälters besteht darin, daß das Eigengewicht des Preßkörpers die Anlage an der heißen Kontaktfläche der Heizeinrichtung zunächst unterstützt.

In weiterer Ausgestaltung der Erfindung ist vorgesehen, daß der Heizeinrichtung im Aufnahmebehälter ein Aschesammelraum zugeordnet ist. Hierdurch wird dem Umstand Rechnung getragen, daß das feste Reduktionsmittel Unreinheiten enthält, welche als Rückstand in fester Form im Aufnahmebehälter zurückbleiben. Ein handelsübliches Reduktionsmittel, wie beispielsweise Cyanursäure, besitzt eine Reinheit von 98 Gewichts-%, so daß 2 Gewichts-% als ascheförmiger Rückstand anfällt. Damit die Asche nicht die Wärmeübertragung zwischen der Kontaktfläche der Heizeinrichtung und dem Preßkörper behindert, weist die Heizeinrichtung geneigte Kontakt- und/oder Bodenflächen auf, beispielsweise Kegelflächen und/oder dachförmige Flächen auf, über die insbesondere durch die Fahrzeugschwingungen begünstigt, die Asche des Reduktionsmittels in den Aschesammelraum überführt werden kann. Der Aschesammelraum kann mit einer Absaugleitung in Verbindung stehen, so daß beim Auswechseln eines Preßkörpers oder auch in vorgegebenen Wartungsintervallen der Aschesammelraum leergesaugt werden kann.

In zweckmäßiger Ausgestaltung der Erfindung ist vorgesehen, daß der Aschesammelraum herausnehmbar in den Aufnahmebehälter eingesetzt ist. Dies hat den Vorteil, daß bei einer Neufüllung der Aschesammelraum außen entleert und etwaige Anbackungen entfernt werden können und keine umständlichen Reinigungsmaßnahmen im Aufnahmebehälter erforderlich sind. Hierbei ist es zweckmäßig, wenn der Aschesammelraum mit dem Deckel verbunden ist. Hierdurch ergibt sich die Möglichkeit, daß beim Abnehmen des Deckels der Aschesammelraum zugleich mit dem Deckel aus den Aufnahmebehälter herausgezogen wird.

Während es grundsätzlich möglich ist, die auf den Innenraum wirkende Beheizung auf der Wärmeisolierung des Aufnahmebehälters anzuordnen, ist in einer zweckmäßigen Ausgestaltung vorgesehen, daß die auf den Innenraum wirkende Beheizung mit dem Deckel verbunden ist. Hierbei ist es ferner zweckmäßig, wenn die Heizung zur Behälterwandung hin mit einer Wärmeisolierung abgedeckt ist. Hierdurch ist ein kompaktes, mit dem Deckel verbundenes Bauteil gegeben, das eine einfache Handhabung beim Befüllen mit einem Preßkörper ermöglicht. Auch eine Reinigung der entsprechenden Flächenteile ist vereinfacht.

In weiterer vorteilhafter Ausgestaltung der Erfindung ist ein rohrförmiges wärmeleitendes Führungsteil für den Preßkörper vorgesehen, das in Kontakt mit der Beheizung steht. Diese Anordnung hat den Vorteil, daß der zweckmäßigerweise als Zylinder geformte Preßkörper in das vorzugsweise mit dem Deckel verbundene Führungsteil eingeführt und dann zusammen mit dem Deckel in den Aufnahmebehälter eingesetzt werden kann. Bei einem Betriebsstillstand und dem damit verbundenen Erkalten des Systems kondensiert das in den notwendigerweise zwischen Preßkörper und Führungsteil vorhandenen Spalt eingedrungene gasförmige Reduktionsmittel wieder zu festem Reduktionsmittel, wobei der Preßkörper an der Wandung des Führungsteils "anbacken" kann. Ist jedoch das Führungsteil, wie erfindungsgemäß vorgesehen, aus einem wärmeleitenden Material hergestellt, dann kann zur Einleitung der Betriebsphase das Führungsteil kurzfristig mit Wärmeenergie beaufschlagt werden, so daß das feste Sublimat im Spaltbereich wieder verdampft und damit der Preßkörper vom Führungsteil frei bewegbar gehalten wird. Zweckmäßig kann es hierbei sein, wenn das rohrförmige Führungsteil sich in Richtung auf die Heizeinrichtung leicht konisch erweiternd ausgebildet ist, so daß schon nach geringer Beheizung sich der Preßkörper im Falle einer "Anbackung" von den Wandungen des Führungsteils löst.

In einer Abwandlung der Erfindung ist vorgesehen, daß der Preßkörper in einer in den Führungsteil einsetzbaren Kartusche aus wärmeleitendem Material enthalten ist. Diese Kartusche kann zugleich als Transport- und Lagerverpackung für den Preßkörper dienen, so daß der Preßkörper lediglich nach Öffnen der Kartusche in den Aufnahmebehälter, zweckmäßigerweise in das mit dem Deckel verbundene Führungsteil eingesetzt werden kann. Durch Rastmittel im Bereich des Deckels des Aufnahmebehälters und durch Rastmittel im Bereich der Öffnung der Kartusche kann sichergestellt werden, daß der Preßkörper beim Einführen in den Aufnahmebehälter nicht herausfällt. Die Rastmittel im Bereich der Öffnung der Kartusche müssen jedoch so ausgestaltet sein, daß sie beim Aufsetzen auf die Kontaktfläche der Heizeinrichtung gelöst werden und so der Preßkörper in der Kartusche sich relativ in Richtung auf die Kontaktfläche der Heizeinrichtung verschieben kann. Das gleiche gilt auch dann, wenn der Preßkörper ohne jegliche Umhüllung unmittelbar in das Führungsteil eingesetzt wird. In diesem Fall muß das Führungsteil an seinem der Heizeinrichtung zugekehrten Ende mit verschwenkbaren Haltenasen versehen sein, die den Preßkörper fixieren und die beim Einsetzen des Führungsteils in den Aufnahmebehälter den Preßkörper freigeben.

In weiterer Ausgestaltung der Erfindung ist vorgesehen, daß insbesondere bei einem als Kartusche ausgebildeten Führungsteil ein mit dem Preßkörper fest verbundenes verschiebbares Bodenteil vorgesehen ist. Dieses Bodenteil weist zweckmäßigerweise ein gewisses Eigengewicht auf, so daß auch der nach längerem Betrieb immer leichter werdende Preßkörper auch mit einem Restteil noch mit genügendem Anpreßdruck gegen die Kontaktfläche angedrückt wird.

Um ein "Tanzen" des immer kleiner und leichter werdenden Preßkörpers im Führungsteil zu verhindern, ist es zweckmäßig, wenn das Bodenteil mit Sperrrasten versehen ist, die nur einen Vorschub in Richtung auf die Heizeinrichtung zulassen. Die Sperrrasten können durch einfache Federnasen gebildet sein, die in entsprechende Vorsprünge an der Innenwandung des Führungsteils und/oder an der Innenwand der Kartusche angreifen. Diese Vorsprünge können sich im Betrieb nicht mit Reduktionsmittel zusetzen, da durch die wiederholte Wärmebeaufschlagung des Führungsteils in den Rasten bei Betriebsruhe kondensiertes Reduktionsmittel bei Inbetriebnahme immer wieder verdampft wird und so die Vorsprünge und die Sperrrasten freigegeben werden. Die Sperrrasten oder Sperrnasen können auch reibschlüssig wirksam sein, beispielsweise in Verbindung mit einem sich konisch erweiternden Führungsteil.

In vorteilhafter weiterer Ausgestaltung der Erfindung ist vorgesehen, daß die Kartusche als zusammendrückbarer Faltenbalg ausgebildet ist. Dadurch ist die Möglichkeit gegeben, den "Totraum" für das gasförmige Reduktionsmittel im Aufnahmebehälter sehr gering zu halten, da entsprechend der über die Kontaktfläche vom Preßkörper abgedampften Reduktionsmittelmenge der Faltenbalg zusammengedrückt werden kann. In den die Kartusche umgebenden Freiraum im Aufnahmebehälter kann dann praktisch kein gasförmiges Reduktionsmittel mehr eindringen. Zweckmäßig ist es hierbei, wenn das der Heizeinrichtung zugekehrte Ende der Kartusche mit einem entsprechenden Anlagerand versehen ist, so daß der Randbereich der Kartusche die Heizeinrichtung um ein gewisses Maß überdecken kann, so daß ein Durchtritt an gasförmigem Reduktionsmittel weitgehend unterbunden ist. Dadurch, daß am Führunsgteil eine entsprechende Beheizung vorgesehen ist, wird sichergestellt, daß bei Inbetriebnahme der Preßkörper im Randbereich freigängig wird, wobei durch die Verwendung eines als Andruckgewicht ausgebildeten Bodenteils das Zusammenschieben des Faltenbalges begünstigt wird. Das Führungsteil braucht hierbei nicht als geschlossenes Rohr ausgebildet zu sein, sondern es genügend entsprechende mit dem Deckel verbundene Streben, die gleichzeitig die Beheizung und ggf. die notwendige Isolierung zur Außenseite hin tragen. Damit ist ein schneller und weitgehend verlustfreier Wärmeübergang zwischen Beheizung und der Außenseite des Faltenbalges gewährleistet. Je nach Ausgestaltung kann die Kartusche auch so ausgebildet sein, daß der Aschesammelraum an den Rand der Kartuschenöffnung mit angeformt ist, so daß eine Abdichtung zwischen dem gasführenden Innenraum der Kartusche einerseits und dem Restraum des Aufnahmebehälters gewährleistet ist.

In zweckmäßiger Ausgestaltung ist eine pneumatische oder mechanisch auf den Preßkörper wirkende Andruckeinrichtung vorgesehen. Die Andruckkraft kann über eine entsprechende, mit Gadruck, beispielsweise mit dem Druck des Abgases beaufschlagte Stelleinrichtung erzeugt werden. Auch der Andruck über eine elektromechanische Stelleinrichtung ist möglich.

In weiterer Ausgestaltung der Erfindung ist vorgesehen, daß dem Dosierventil zuflussseitig ein Überhitzer zugeordnet ist. Hierdurch ist gewährleistet, daß beim Öffnen des Dosierventils und der damit verbundenen Temperaturabsenkung bei der Entspannung des Reduktionsmittelgases der enge Durchlasskanal des Dosierventils sich mit kondensiertem Sublimat zusetzt und verstopft. Der Überhitzer muß hinsichtlich seiner thermischen Leistung so ausgelegt werden, daß eine thermische Umsetzung des Reduktionsmittelgases in gasförmige reduktive Produkte noch nicht erfolgt. Zweckmäßig ist es hierbei, daß der Überhitzer am Dosierventil den Bereich des Durchlaßkanals überdeckt.

In weiterer Ausgestaltung der Erfindung ist vorgesehen, daß das Dosierventil einen Durchlasskanal aufweist, der zulaufseitig mit dem Gassammelraum in Verbindung steht und der ablaufseitig als Ventilsitz ausgebildet ist und in einen Überströmraum mündet, dessen Austrittsöffnung in die Reaktionskammer mündet, daß im Überströmraum ein Ventilkörper hin und her bewegbar gehalten ist, dessen Spitze am Ventilsitz dichtend andrückbar ist und der sich auf einer elastischen Membran abstützt, und daß auf der anderen Seite der Membran ein mit einer Schließfeder verbundenes Stellelement angeordnet ist, das mit dem Ventilkörper über die Membran in Wirkverbindung steht und dem ein Aktuator zugeordnet ist. Eine derartige Ausgestaltung hat den Vorteil, daß für den bewegbaren Teil des Dosierventils, d. h. für den Ventilkörper keine besondere Dichtungen und/oder Führungen vorgesehen werden müssen, die sich beim Erkalten mit kondensierendem Sublimat zusetzen könnten, was eine Wieder-inbetriebnahme erschweren könnte. Der "heiße" Teil des Dosierventils ist durch die Membrane gegenüber dem "kalten" Teil, nämlich der Aktuatorseite abgedichtet. Der Ventilkörper kann hierbei fest mit der Membran verbunden sein, so daß dann die Membran gleichzeitig als Führungsmittel wirkt. Durch eine konische Ausbildung des ablaufseitigen Ventilsitzes des Durchlaßkanals wirkt dieses System selbstzentrierend und kann durch die am Stellelement angeordnete Schließfeder in Schließposition gehalten werden. Ein derartiges Dosierventil kann beispielsweise mit einem elektromagnetischen Aktuator versehen sein, so daß das Dosierventil taktend geöffnet und geschlossen werden kann, so daß über die Taktzahl und die Öffnungszeit pro Takt die durchzulassende Menge an Reduktionsmittelgas bemessen werden kann.

In Ausgestaltung der Erfindung ist vorgesehen, daß der Ventilkörper mit einer Öffnerfeder in Verbindung steht. Diese Anordnung hat den Vorteil, daß die Membran nur Dichtfunktion zu übernehmen hat, so daß man in der Materialwahl nur auf die thermische und chemische Beständigkeit Rücksicht zu nehmen hat. Der Ventilkörper wird über die Öffnerfeder zugleich geführt, wobei die Öffnerfeder so stark ausgelegt werden muß, daß beim Betätigen des Aktuators die Membran genügend durchgedrückt werden kann, um den Ventilsitz freizugeben. Die Federn sind zweckmäßig so ausgelegt, daß die Kraft der Schließfeder größer ist als die Kraft der Öffnerfeder. Bei einem stromlos gesetzten elektromagnetischen Aktuator befindet sich das Dosierventil immer in Schließstellung.

Die Erfindung wird anhand schematischer Zeichnungen von Ausführungsbeispielen näher erläutert. Es zeigen:
- Fig. 1: einen Grundaufbau einer Einrichtung zur dosierten Erzeugung von gasförmigen reduktiven Produkten aus einem festen Reduktionsmittel,
- Fig. 2: in vergrößertem Maßstab eine erste Ausführungsform für einen Aufnahmebehälter,
- Fig. 3: eine Ausführungsform für einen Aufnahmebehälter zur Verwendung von Reduktionsmittelkartuschen,
- Fig. 4: eine abgewandelte Ausführungsform zu Fig. 3 mit Faltenbalgkartusche,
- Fig. 5: eine Ausführungsform mit pneumatischer Andruckeinrichtung für einen Preßkörper,
- Fig. 6: eine Ausführungsform mit mechanischer Andruckeinrichtung für den Preßkörper,
- Fig. 7: in einem Schnitt eine Ausführungsform für ein Dosierventil.

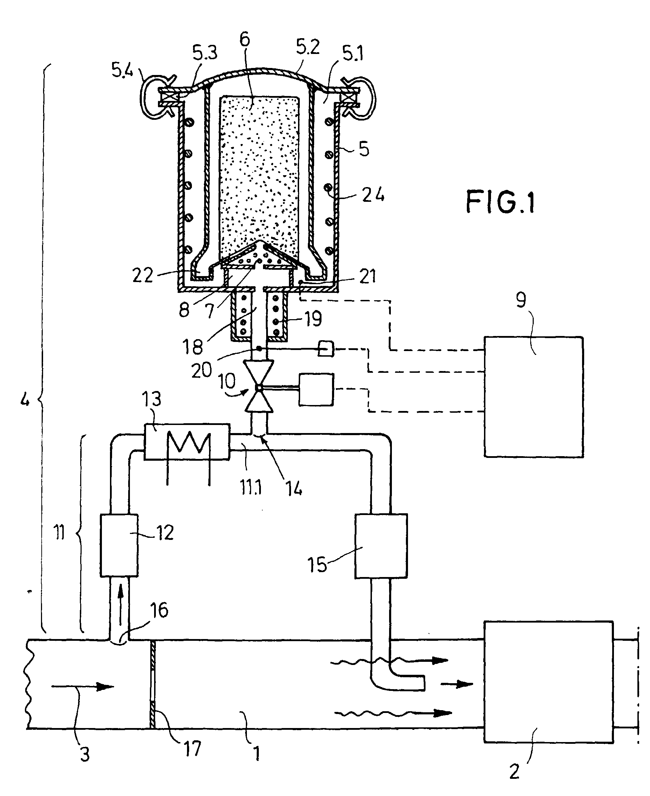

Fig. 1 zeigt einen Teil eines Abgasrohres 1 einer Kolbenbrennkraftmaschine, beispielsweise eines Dieselmotors, das mit einer Katalysatoreinrichtung 2 versehen ist, die einen selektiven Reduktionskatalysator aufweist. Die Abgasleitung 1 wird in Richtung des Pfeiles 3 vom Abgas durchströmt.

Der Abgasleitung 1 ist eine Einrichtung 4 für die Zufuhr eines als Feststoff vorliegenden Reduktionsmittels zugeordnet. Die Einrichtung 4 besteht im wesentlichen aus einem Aufnahmebehälter 5 für ein als Feststoff in Form eines Preßkörpers 6 vorliegenden Reduktionsmittels.

Der Aufnahmebehälter 5 weist im Bodenbereich eine Heizeinrichtung 7 und einen damit verbundenen Gassammelraum 8 auf, an den ein über eine Steuereinrichtung 9 ansteuerbares Dosierventil 10 angeschlossen ist.

Der in den Aufnahmebehälter 5 eingesetzte, beispielsweise als zylindrischer Körper geformte Preßkörper 6, beispielsweise Cyanursäure, liegt mit einem Ende auf der Heizeinrichtung 7 auf und wird über Wärmezufuhr im Kontaktbereich mit der Heizeinrichtung 7 durch einen Sublimationsvorgang in seine Gasphase überführt. Die Temperatur der Heizeinrichtung 7 ist hierbei so geführt, daß die Gasphase des Reduktionsmittels nicht in reduktive Produkte zerlegt wird und dementsprechend bei einem Abkühlen der Einrichtung das gasförmige Reduktionsmittel wieder in seiner festen Form kondensiert.

Das Dosierventil 10 mündet in eine Reaktionskammer 11 ein, in der das gasförmige Reduktionsmittel in gasförmige reduktive Produkte umgesetzt wird. Bei dem hier dargestellten Beispiel soll die Umsetzung des aus dem Dosierventil 10 austretenden gasförmigen Reduktionsmittel durch eine Hydrolysereaktion erfolgen.

Bei dem hier dargestellten Ausführungsbeispiel wird die Reaktionskammer 11 im wesentlichen durch eine Bypaßleitung 11.1 zur Abgasleitung 1 gebildet, die zulaufseitig einen Pulsationsdämpfer 12 aufweist und die ferner mit einer mit elektrischer Energie zu betreibenden Zusatzheizeinrichtung 13 versehen ist, um eine vorgegebene Temperaturlage für das die Bypaßleitung 11.1 durchströmende Abgas zu gewährleisten. Hinter der Einmündung 14 des Dosierventils 10 ist ein HydrolyseKatalysator 15 vorgesehen, in den durch katalytische Einwirkung das durch die Bypaßleitung 11.1 strömende wasserhaltige, mit dem gasförmigen Reduktionsmittel vermischte Abgas in gasförmige reduktive Produkte umgesetzt wird, die dann wieder in die Abgasleitung 1 zurückgeführt werden, so daß die eingangs beschriebene selektive katalytische Reduktion im Abgaskatalysator 2 erfolgen kann.

Das für die Durchströmung der Bypaßleitung 11.1 notwendige Druckgefälle kann dadurch erzeugt werden, daß unmittelbar hinter der Abzweigung 16 der Bypaßleitung 11.1 von der Abgasleitung 5.1 ein druckerhöhender Einbau 17, beispielsweise in Form einer Blende oder eines Drallkörpers angeordnet ist.

Die Einrichtung 4 arbeitet in der Weise, daß über die geregelt elektrisch beheizbare Heizeinrichtung 7 vom Preßkörper 6 eine entsprechende Menge abgedampft wird, die im Aufnahmebehälter 5 unter einem geringen Vordruck von etwa 0,5 bar vorgehalten wird. Das beispielsweise als getaktetes Ventil ausgebildete Dosierventil 10 wird über die Motorsteuerung 9 entsprechend den Anforderungen angesteuert. Über die Motorsteuerung 9 wird auch die Heizleistung der Heizeinrichtung 7 angesteuert, so daß immer ein ausreichender Vorrat an gasförmigem Reduktionsmittel unter dem vorgegebenen Druck im Aufnahmebehälter 5 vorhanden ist.

Der Aufnahmebehälter 5, dessen Wandungen vorzugsweise wärmeisoliert ausgebildet sind, um eine Abstrahlung der Wärme nach außen zu verhindern, ist ferner mit einer ebenfalls gesteuerten und/oder geregelten elektrischen Beheizung 24 versehen, durch die gewährleistet ist, daß das im Innenraum des Aufnahmebehälters 5 befindliche Reduktionsmittelgas während des Betriebes eine Mindesttemperatur behält und sich nicht als Feststoff an den Behälterwandungen niederschlagen kann und damit nicht mehr für die Umsetzung in der Reaktionskammer 11 zur Verfügung steht.

Um zu verhindern, daß das aus dem Gassammelraum durch das Dosierventil 10 strömende Reduktionsmittelgas infolge der Druckentspannung beim Öffnungsvorgang im Bereich des zum Dosierventil 10 führenden Durchlasskanal 18 und im Dosierventil nicht kondensieren kann, ist dieser Bereich mit einem elektrischen Überhitzer 19 versehen, der in seiner Temperaturführung so ausgelegt ist, daß das Reduktionsmittelgas in Dampfform gehalten, aber noch nicht in seine reduktiven Bestandteile zerlegt wird. Über Temperatursensoren, die mit der Steuerung bzw. Regelung 9 verbunden sind, beispielsweise einen Temperatursensor 20 im Bereich des Durchlasskanals 18, kann die Temperaturlage geführt werden. Über einen Drucksensor 21 kann darüber hinaus gewährleistet werden, daß im Aufnahmebehälter 5 das Reduktionsmittel unter einem entsprechenden Vordruck gehalten werden kann, so daß in Verbindung mit den Öffnungszeiten des Dosierventils 10 die erforderliche Mengendosierung gewährleistet ist.

Da die handelsüblichen in fester Form vorliegenden Reduktionsmittel. beispielsweise Cyanursäure, Unreinheiten aufweisen, die in der Größenordnung von etwa 2 Gewichts-% liegen und die bei der vorstehend beschriebenen Umsetzung des festen Reduktionsmittels in gasförmiges Reduktionsmittel als ascheförmiger Rückstand anfallen, ist im Aufnahmebehälter 5 ein der Heizeinrichtung 7 zugeordneter Aschesammelraum 22 vorgesehen. Durch eine beispielsweise kegelförmige Ausbildung der Heizeinrichtung 7 ist gewährleistet, daß die beim Verdampfungsvorgang anfallenden ascheförmigen Rückstände infolge der auf die Einrichtung 4 einwirkenden Erschütterungen aus dem Fahrbetrieb in den Aschesammelraum 22 abgeführt werden.

Bei dem hier dargestellten Ausführungsbeispiel ist der Aufnahmebehälter 5 als zylindrischer Körper vorgesehen, so daß auch die Heizeinrichtung 7 entsprechend kegelförmig ausgebildet ist und somit der Aschesammelraum 22 die kegelförmige Heizeinrichtung 7 ringförmig umfaßt.

Der Aschesammelraum 22 kann nun als lösbares Bauteil in den Aufnahmebehälter 5 eingesetzt sein, so daß bei Inspektionen oder vor einem Einführen eines neuen Preßkörpers 6 die aufgefangene Asche und Rückstände entfernt werden können. Der Aschesammelraum 22 kann aber auch fest im Aufnahmebehälter 5 angeordnet sein und mit einer Absaugeinrichtung in Verbindung stehen, so daß bei Inspektion oder während des Betriebes durch kurzzeitiges Öffnen eines Abblaseventils die gesamte Asche abgeblasen werden kann.

Der Aufnahmebehälter 5 ist zweckmäßigerweise so ausgebildet, daß er eine obenliegende Einfüllöffnung 5.1 aufweist, die über einen Deckel 5.2 dicht verschließbar ist. Da für die Umsetzung des festen Reduktionsmittels erhöhte Temperaturen benötigt werden, beispielsweise bei der Umwandlung von fester Cyanursäure in gasförmige Cyanursäure etwa 400°C benötigt werden, weist diese Anordnung den Vorteil auf, daß die notwendigen Dichtungen 5.3 zwischen dem Aufnahmebehälter 5 und seinem Deckel 5.2 in einem niedrigeren Temperaturbereich liegen. Der Deckel 5.2 ist über Verschlußelemente 5.4 mit dem Aufnahmebehälter verbunden.

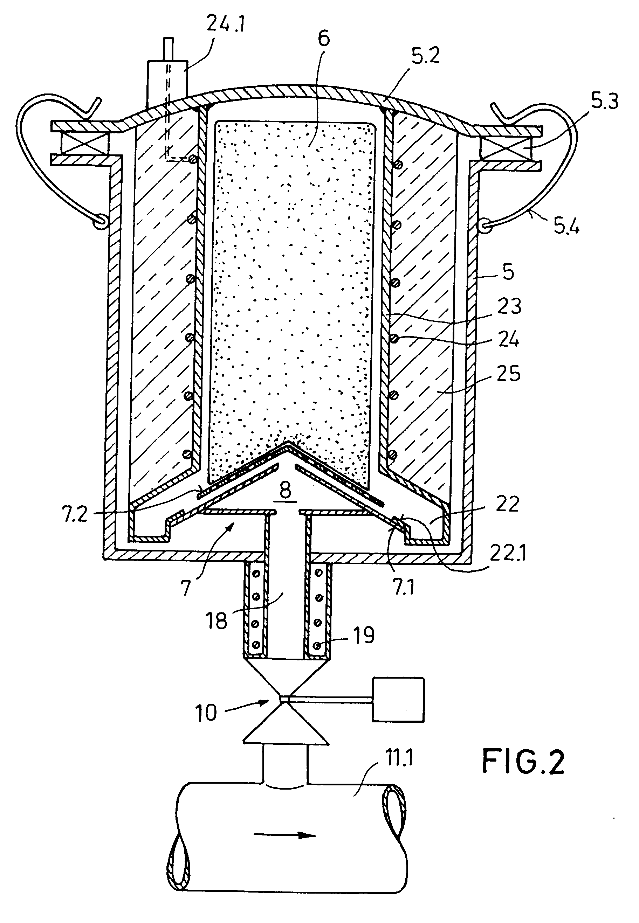

In Fig. 2 ist eine Ausführungsform für den Aufnahmebehälter 5 in größerem Maßstab dargestellt. Bereits beschriebene Bauteile sind mit den gleichen Bezugszeichen versehen, so daß auf die vorstehende Beschreibung verwiesen werden kann.

Bei dem in Fig. 2 dargestellten Ausführungsbeispiel ist der Deckel 5.2 mit einem rohrförmigen Führungsteil 23 aus einem gut wärmeleitenden Material fest verbunden. Das der Heizeinrichtung 7 zugekehrte Ende des Führungsteils 23 ist als ringförmiger Aschesammelraum 22 ausgebildet, der mit seinem freien Rand 22.1 auf einer Bodenfläche 7.1 der Heizeinrichtung 7 aufliegt.

Auf der Außenseite des Führungsteils 23 ist eine elektrische Beheizung 24 angeordnet, die durch eine Wärmeisolierung 25 abgedeckt ist. Die Zufuhr von elektrischer Energie zur Beheizung 24 erfolgt über einen am Deckel 5 angeordneten Stecker 24.1.

Die hier als kegelförmiges Element ausgebildete Heizeinrichtung 7 ist mit Abstand zur geschlossenen Bodenfläche 7.1 wärmeleitend mit einer Kontaktfläche 7.2 versehen, auf der ein in den Führungsteil 23 eingesetzter zylindrischer Preßkörper 6 aus Reduktionsmittel aufliegt und durch sein Eigengewicht oder durch entsprechende Vorschubmittel in Form einer Feder oder eines Auflagegewichtes ausgedrückt wird.

Die Kontaktfläche 7.2 ist perforiert ausgeführt, so daß das vom Preßkörper 6 abgedampfte Reduktionsmittel über den Durchlasskanal 18 des Dosierventils 10 ggf. nach Aufheizung durch den Überhitzer 19 in den als Teil einer Reaktionskammer dienenden Bypaßkanal 11.1 einströmen kann. Ist der eingesetzte Preßkörper verbraucht, werden die Verschlußmittel 5.4 gelöst, so daß das als Baueinheit mit dem Deckel verbundene Führungsteil 23 zusammen mit der Beheizung 24 der Isolierung 25 und dem Aschesammelraum 22 aus dem Aufnahmebehälter 5 herausgenommen werden kann. Nach dem Entleeren des Aschesammelraums 22 wird in den Aufnahmebehälter 5 ein neuer Preßkörper 6 eingesetzt. Da der Preßkörper 6 zweckmäßigerweise bereits im Ausgangszustand eine entsprechend der Kontaktfläche 7.2 konisch eingeformte Berührungsfläche aufweist, kann der Preßkörper 6 selbstzentrierend lose auf die Kontaktfläche 7.2 aufgesetzt werden und anschließend der Deckel 5 mit seinen Anbauten in den Aufnahmebehälter 5 eingeschoben und verschlossen werden.

Das Führungsteil 23 kann in Richtung auf den Aschesammelraum leicht konisch erweitert ausgebildet sein, so daß der eingesetzte Preßkörper 6 sich immer ggf. nach Aufheizung über die Beheizung 24 von selbst freisetzt und damit sich entsprechend der abdampfenden Reduktionsmittelmenge relativ am Führungsteil 23 absenken kann. Dies wird noch durch die Erschütterungen im Fahrbetrieb unterstützt.

Das Führungsteil 23 kann aber auch - im Horizontalschnitt - wellenförmig gestaltet sein, so daß der Preßkörper 6 immer nur mit in Bewegungsrichtung verlaufenden Wandstegen in einer Linienberührung steht.

Obwohl die Wandung des Aufnahmebehälters 5 nach außen hin zweckmäßigerweise wärmeisoliert ausgebildet sein sollte, kann es zweckmäßig sein, wenn auch auf der Innenseite der Wandung des Aufnahmebehälters 5 eine zusätzliche elektrische Beheizung vorgesehen ist, um sich auf der Innenwandung des Aufnahmebehälters 5 niederschlagendes Kondensat von Reduktionsmittel zumindest in gewissen Zeitintervallen abzudampfen.

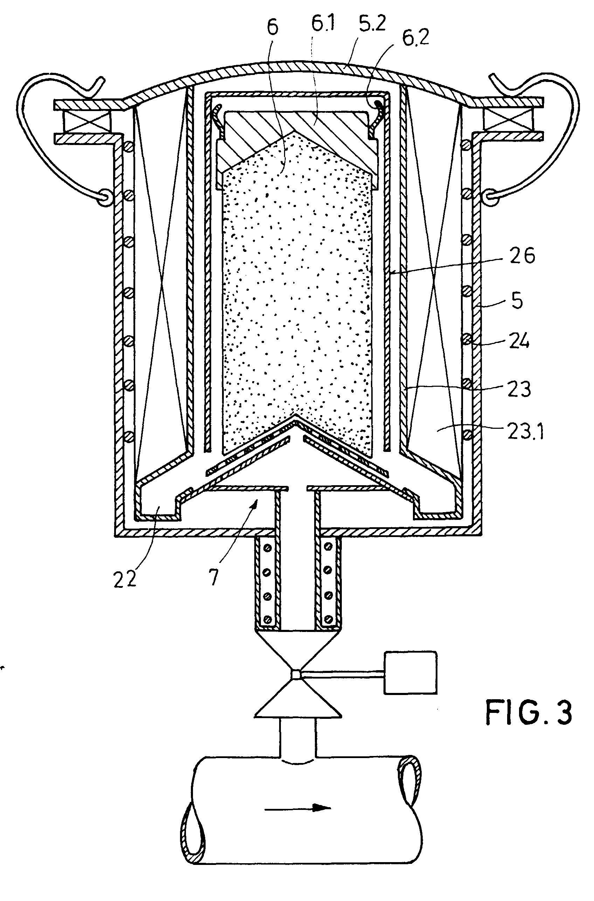

Während bei der Ausführungsform gern. Fig. 2 ein "blanker", d. h. unverpackter Preßkörper 6 eingesetzt werden soll, zeigt Fig. 3 eine andere Ausgestaltung der Einrichtung 4. Der Grundaufbau der in Fig. 3 dargestellten Ausführungsform entspricht der Ausführungsform gem. Fig. 2, so daß identische Bauteile mit identischen Bezugszeichen versehen sind. Auch bei dieser Ausführungsform ist der Aschesammelraum 22 über ein rohrförmiges Führungsteil 23 oder aber über entsprechend stegförmige Führungsteile mit dem Deckel 5.1 fest verbunden. Das Führungsteil 23 ist auf seiner Außenseite mit beispielsweise stegförmig ausgebildeten Wärmeleitelementen 23.1 verbunden, die sich bis an die Innenseite der nach außen wärmeisoliert ausgebildeten Wandung des Aufnahmebehälters 5 erstrecken. Auf der Innenseite ist die Wandung mit einer elektrischen Beheizung 24 versehen, über die der Freiraum des Aufnahmebehälters , aber auch über die Wärmeleitelemente 23.1 das Führungsteil 23 erwärmt werden kann.

Bei dem hier dargestellten Ausführungsbeispiel ist der Preßkörper 6 in einer Kartusche 26 aus einem wärmeleitendem Material, beispielsweise aus Aluminium verpackt, die nach Ziehen eines Sekundärverschlusses, beispielsweise in Form einer Dichtfolie, wie beschrieben auf die konische Kontaktfläche 7.2 der Heizeinrichtung 7 aufgesetzt werden kann. Danach wird der Deckel 5.1 mit seinem Führungsteil 23 und den damit verbundenen Wärmeleitelementen 23.1 in den Aufnahmebehälter 5 eingeführt und dicht verschlossen.

Auch bei diesem Ausführungsbeispiel kann die Kartusche 26 in Richtung auf die Heizeinrichtung 7 geringfügig konisch erweitert sein, so daß ein einwandfreies Absinken des Preßkörpers 6 in der Kartusche 26 gewährleistet ist.

Bei dem in Fig. 3 nach einiger Betriebszeit dargestellten Ausführungsbeispiel ist der Preßkörper 6 mit einem Bodenteil 6.1 fest verbunden, der ein gewisses Eigengewicht aufweist, so daß auch noch ein Reststück des Preßkörpers 6 zuverlässig auf die Kontaktfläche der Heizeinrichtung 7 angedrückt wird.

Das Bodenteil 6.1 kann hierbei mit den hier nur angedeuteten Sperrrasten 6.2 versehen sein, die so ausgestaltet sind, daß der Preßkörper 6 mit dem daran angeordneten Bodenteil 6.1 frei nach unten absinken kann, daß jedoch eine Bewegung in Gegenrichtung praktisch ausgeschlossen ist. Damit wird ein "Tanzen" des Preßkörpers 6 unter dem Einfluß von Fahrzeugerschütterungen und damit u. U. ein Zerschlagen des Preßkörpers 6 in Bruchstücke vermieden. Die Sperrrasten 6.2 können hierbei reibschlüssig klemmend auf die Innenwandung der Kartusche 26 einwirken oder aber in entsprechende, in der Kartuschenwandung eingeformte Rasten eingreifen.

Derartige Sperrrasten können auch in Verbindung mit einem Bodenteil 6.1 verwendet werden, das mit einem unverpackt in den Führungsteil 23 eingesetzten Preßkörper 6 bei der Ausführungsform gern. Fig. 2 vorgesehen sein.

Bei den Ausführungsformen gem. Fig. 2 und 3 füllt sich durch die Verdampfung der gesamte Innenraum des Aufnahmebehälters 5 mit gasförmigem Reduktionsmittel, das beim Abkühlen sich an allen Wandungsteilen niederschlägt und das dann vor oder zu Beginn einer Inbetriebnahme über die Beheizung 24 zunächst abgedampft werden muß, um sicherzustellen, daß der eingesetzte Preßkörper 6 sich auch frei nach unten bewegen kann und immer fest an der Kontaktfläche 7.2 der Heizeinrichtung anliegt.

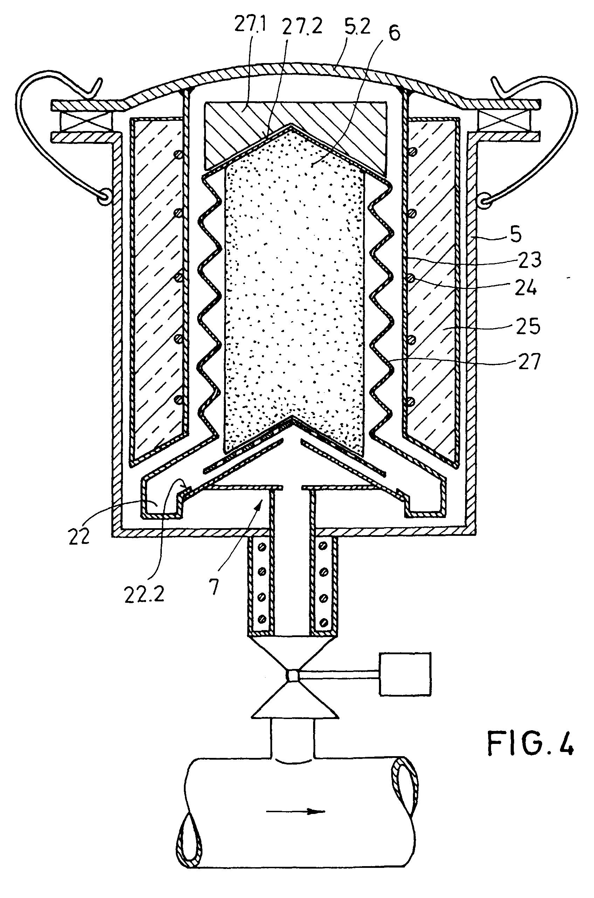

In Fig. 4 ist eine Ausführungsform dargestellt, die so ausgestaltet ist, daß hier ein Totraum praktisch vermieden ist. Die Ausführungsform gem. Fig. 4 entspricht in ihrem Aufbau im wesentlichen dem Ausführungsbeispiel gem. Fig. 2, so daß auf die entsprechende Beschreibung zu Fig. 2 verwiesen werden kann. Bei dem Ausführungsbeispiel gem. Fig. 4 ist in den beheizbaren, rohrförmigen und mit dem Deckel 5.1 verbundenen Führungsteil 23 eine Kartusche 27 eingesetzt, die in Form eines Faltenbalges ausgeführt ist und die einen entsprechend geformten Preßkörper 6 umhüllt.

Auf der der Heizeinrichtung 7 zugekehrten Seite ist an der Kartusche 27 ein Aschesammelraum 22 angeformt, der mit seiner freiliegenden Kante 22.2 dichtend an der Heizeinrichtung 7 anliegt.

Nach dem Einsetzen der Kartusche 27 wird, wie vorstehend beschrieben, der Deckel 5.2 mit Führungsteil 23, Beheizung 24 und Isolierung 25 in den Aufnahmebehälter eingeführt und dicht mit diesem verschlossen.

Durch ein auf dem Boden 27.2 der Kartusche 27 lose aufliegendes oder ein mit diesem fest verbundenes, als Andruckelement ausgebildetes Bodenteil 27.1 wird gewährleistet, daß entsprechend der vom Preßkörper 6 abgedampften Menge der als Faltenbalg ausgebildete Kartuschenkörper zusammengedrückt wird. Auch hier kann der Bodenteil 27.1 wieder mit entsprechend ausgebildeten Sperrrasten verbunden sein, die ein einwandfreies Absinken des Bodenteils 27.1 gewährleisten, jedoch ein "Tanzen" der eingesetzten Kartusche 27 und/oder des Bodenteils 27.1 im Führungsteil 23 insgesamt verhindern. Der Vorteil dieser Anordnung besteht darin, daß durch die Anformung des Aschesammelraums 22 an den Kartuschenkörper und die weitgehend abgedichtete Verbindung zwischen Kartusche 27 und Heizeinrichtung 7 in den übrigen Innenraum der Aufnahmebehälters 5 praktisch kein Reduktionsmittelgas eintreten kann. Damit wird das aus konstruktiven Gründen, insbesondere in Verbindung mit einem herausnehmbaren Aschesammelraum bedingte Totvolumen des Aufnahmebehälters gegen einen Übertritt von Reduktionsmittelgas abgeschirmt. Über die Erwärmung des rohrförmigen Führungsteils 23 mit Hilfe der Beheizung 24 ist gewährleistet, daß die sich in den Falten der Kartusche 27 niederschlagenden Sublimate soweit aufgewärmt und gelöst werden, daß ein Zusammenschieben des Faltenbalges entsprechend des Reduktionsmittelverbrauchs gewährleistet ist.

Wird jedoch auf einen herausnehmbaren Aschesammelraum verzichtet und stattdessen ein im Aufnahmebehälter integrierter und von außen, beispielsweise durch Absaugung entleerbarer Aschesammelraum vorgesehen, dann besteht die Möglichkeit, den Innendurchmesser des Aufnahmebehälters 5 praktisch auf den Außendurchmesser des einzusetzenden Preßkörpers bzw. einer einzusetzenden Kartusche zu reduzieren.

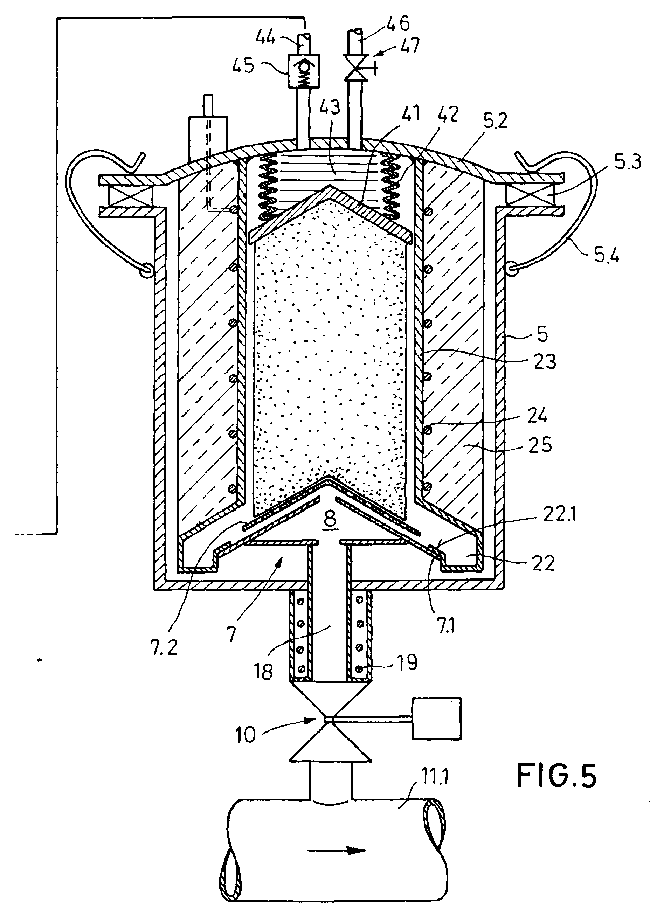

Um einen gleichbleibenden Andruck des Preßkörpers 6 an der Kontaktfläche 7.2 der Heizeinrichtung 7 zu bewirken, ist bei den Ausführungsbeispielen gem. Fig. 3 und 4 ein als Gewicht ausgebildetes Bodenteil 6.1 bzw. 27.1 dargestellt. Fig. 5 zeigt eine andere Ausgestaltung für eine Andruckeinrichtung. Bei dieser Ausführungsform ist ein Andruckelement 41 vorgesehen, das über einen Faltenbalg 42 fest mit dem Deckel 5.2 verbunden ist. Der Deckel weist eine in den vom Faltenbalg 42 umschlossenen Druckraum 43 einmündende Druckgasleitung 44 auf, die mit einem Sperrventil 45, beispielsweise einem Rückschlagventil versehen ist. Die Druckgasleitung 44 steht mit einer Druckwelle in Verbindung, beispielsweise mit der Abgasleitung 1 stromauf zum Stauelement 17 (Fig. 1). Der Druckraum 43 ist ferner mit einer Entlüftungsleitung 46 versehen, die über ein Sperrventil 47 verschlossen ist. Mit dieser Anordnung ist es möglich, durch die Aufrechterhaltung eines entsprechenden Überdrucks das Andruckelement 41 während des Betriebes auf das obere Ende des Preßkörpers 6 aufzudrücken uns so den Preßkörper 6 auf die Kontaktfläche 7.2 zu drücken und gleichzeitig ein "Tanzen" des Preßkörpers 6 zu verhindern.

Sobald der Preßkörper 6 vollständig verbraucht ist, kann, wie vorstehend bereits beschrieben, der Deckel 5.2 abgenommen werden, das Sperrventil 47 der Entlüftungsleitung geöffnet werden, so daß nach dem Einsetzen eines neuen Preßkörpers der Deckel 5.2 wieder aufgesetzt werden kann, wobei dann bei geöffnetem Sperrventil 47 der Faltenbalg 42 wieder zusammengedrückt werden kann. Nach dem Schließen des Sperrventils 47 ist die Einrichtung wieder betriebsbereit.

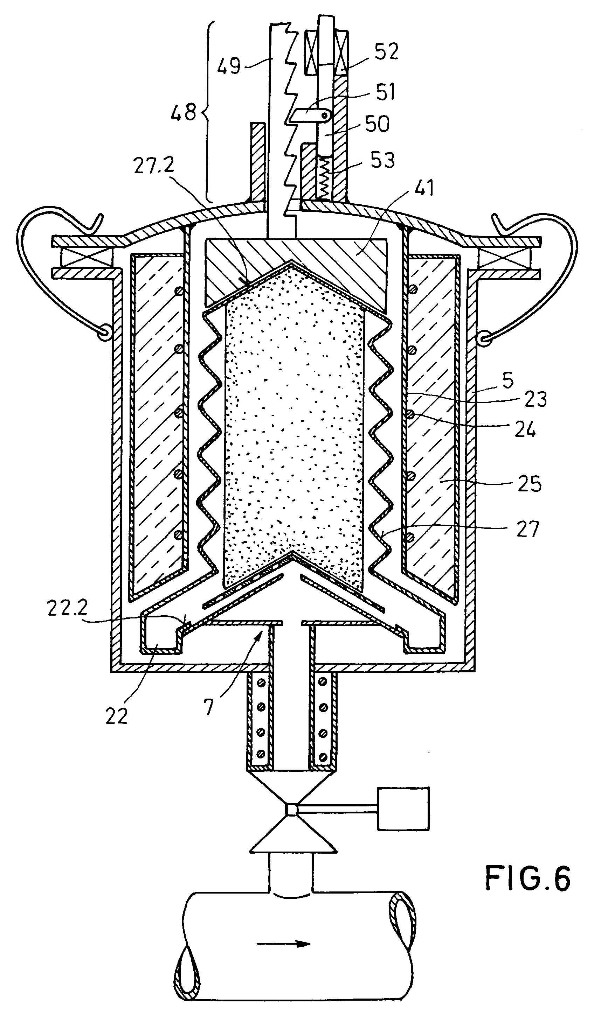

Fig. 6 zeigt am Beispiel der Ausführungsform gem. Fig. 4 eine mechanische Andruckeinrichtung. Diese besteht im wesentlichen wieder aus einem Andruckelement 41, das auch als Gewicht ausgebildet sein kann, mit dem ein Antrieb 48 verbunden ist. Das hier dargestellte Ausführungsbeispiel zeigt rein schematisch eine Form eines Schrittschaltmotors. Hierbei ist mit dem Andruckelement 41 eine Zahnstange 49 verbunden, der ein Schlittenelement 50 mit einer Mitnehmerklinke 51 zugeordnet ist, das über einen Schaltmagneten 52 angehoben und über ein Federelement 53 nach unten gezogen wird. Damit ist es möglich, schrittweise und im wesentlichen mit einer durch die Feder 53 bewirkten konstanten Andruckkraft das Andruckelement 41 auf den Boden 27.2 der Kartusche 27 aufzudrücken. Um eine neue Kartusche einsetzen zu können, ist die Mitnehmerklinke 51 mit einem hier nicht näher dargestellten Entriegelungsmechanismus verbunden, der es erlaubt, das Andruckelement 41 vollständig zurückzuschieben, wenn eine neue Kartusche eingesetzt wird.

Die anhand der Fig. 5 und 6 beschriebenen Andruckeinrichtungen sind nicht auf die dargestellten und beschriebenen Ausführungsbeispiele beschränkt. In gleicher Weise ist es möglich, die pneumatische Andruckeinrichtung für die Kartuschensysteme gem. Fig. 3 oder 4 ebenso einzusetzen, wie die mechanische Andruckeinrichtung für die Ausführungsform gem. Fig. 2 verwendet werden kann. Auch andere Formen für den "Antrieb" der Andruckeinrichtungen sind denkbar, so beispielsweise ein Elektromotor mit Rutschkupplung, der über ein Ritzel auf eine Zahnstange einwirkt, wobei die Zahnstange ihrerseits mit einer Sperrklinkeneinrichtung versehen ist, die gewährleistet, daß das Andruckelement 41 nicht vom Preßkörper 6 bzw. der Kartusche 27 abheben kann.

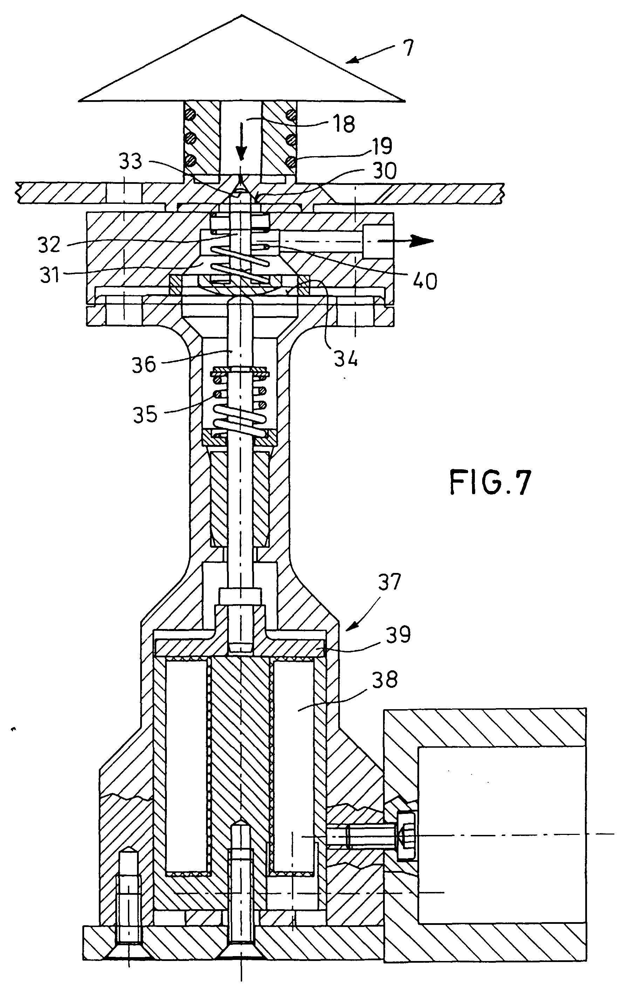

Fig. 7 zeigt eine spezielle Ausführungsform für das Dosierventil 10. Da das Dosierventil sich in unmittelbarer Nähe der Heizeinrichtung 7 befindet und hier ein Reduktionsmittelgas mit einer Temperatur bis zu etwa 450°C durchgeleitet werden muß, sind übliche Dosierventile nicht mehr einsetzbar. Bei der hier dargestellten Ausführungsform ist der zulaufseitig mit dem Gassammelraum der Heizeinrichtung 7 verbundene Durchlaßkanal 18 ablaufseitig als sich konisch erweiternder Ventilsitz 30 ausgebildet. Der Durchlaßkanal 18 mündet in einen Überströmraum 31, der mit der Einmündung 14 der Reaktionskammer 10 (vgl. Fig. 1) in Verbindung steht. Im Überströmraum 30 ist ein Ventilkörper 32 hin und her bewegbar gehalten, dessen Spitze 33 an den Ventilsitz 30 dichtend andrückbar ist. Der Ventilkörper 32 stützt sich auf einer elastischen Membran 34 ab, der auf ihrer anderen Seite ein mit einer Schließfeder 35 verbundenes Stellelement 36 zugeordnet ist und das über die Membran 34 mit dem Ventilkörper 32 in Wirkverbindung steht.

Das Stellelement 36 ist mit einem Aktuator 37 verbunden, der bei dem hier dargestellten Ausführungsbeispiel beispielsweise als elektromagnetischer Aktuator ausgebildet ist. Bei unbestromter Spule 38 wird das Stellelement 36 durch die Kraft der Schließfeder 35 auf den Ventilkörper 32 gedrückt, der sich hierdurch selbszentrierend mit seiner Spitze im Ventilsitz 30 anlegt. Wird die Spule 38 bestromt, dann wird ein Anker 39 angezogen, das Stellelement 36 zurückgezogen, so daß der Ventilkörper 31 unter entsprechender Verformung der Membran 34 in Öffnungsstellung zurückbewegt werden kann.

Es ist grundsätzlich möglich, den Ventilkörper 32 fest mit der elastischen Membran 34 zu verbinden, so daß die Mebran 34 praktisch als Öffnerfeder fungiert. Es ist aber auch möglich, das Stellelement 36 seinerseits fest mit dem Membran 34 zu verbinden, so daß mit dem Zurückziehen des Stellelementes 36 auch der Ventilkörper 32 in Öffnungsstellung zurückgezogen wird.

Bei dem hier dargestellten Ausführungsbeispiel ist dem Ventilkörper 32 eine Öffnerfeder 40 zugeordnet, die in ihrer Kraft jedoch schwächer ausgelegt ist als die Schließfeder 35, so daß bei stromlosgesetztem Aktuator die stärkere Schließfeder 35 den Ventilkörper 32 in Schließstellung hält. Wird der Aktuator 37 bestromt und das Stellelement 36 zurückgezogen, dann bewegt die Öffnerfeder 40 den Ventilkörper unter gleichzeitiger Verformung der Membran 34 in Öffnungsrichtung. Bei dieser Ausführungsform muß hinsichtlich der Materialwahl für die Membran 34 nur auf ihre Beständigkeit in bezug auf Temperatur und das auf sie einwirkende heiße gasförmige Reduktionsmittel Rücksicht genommen werden. Federeigenschaften sind, da die Öffnerfeder 40 vorhanden ist, nicht gefordert.

Die Zusatzheizung 19 im Bereich des Durchlaßkanals 18 gewährleistet, daß beim Austreten des gasförmigen Reduktionsmittels in den Überströmraum 31 bei entsprechender Temperaturführung der Zusatzheizung 19 keine Sublimation stattfindet und so das Reduktionsmittel auch gasförmig in die Reaktionskammer 10 übertreten kann.

Für das Ausführungsbeispiel gem. Fig. 1 wurde die Verwendung einer mit elektrischer Energie versorgten Heizeinrichtung 7 beschrieben. Da im Betrieb über die heißen Abgase genügend "Abfallwärme" zur Verfügung steht, ist es zweckmäßig, die Heizeinrichtung 7 so auszugestalten, daß sie beispielsweise in der Startphase, wenn noch keine Abgaswärme zur Verfügung steht, mit elektrischer Energie beaufschlagt wird. Sobald dann über das Abgas genügend Wärmeenergie zur Verfügung steht, wird über einen Wärmeträger die Wärmeenergie zugeführt. Der beispielsweise flüssige Wärmeträger wird über einen Wärmetauscher WT aufgeheizt, der, wie in Fig. 1 nur schematisch dargestellt, dem Abgasrohr 1 in einem Bereich zugeordnet ist, in dem das Abgas im Betrieb die für die Verdampfung des eingesetzten Reduktionsmittels notwendige Temperaturlage aufweist. Bei Reduktionsmitteln, die eine hohe Verdampfungstemperatur benötigen, wird der Wärmetauscher WT in Motornähe angeordnet.

Wie in Fig. 1 angedeutet, wird der Wärmeträger im Kreislauf durch den Wärmetauscher WT und die Heizeinrichtung 7 mittels einer Pumpe P geführt. Zur Regelung der Heizleistung ist die Pumpe P beispielsweise mit einem drehzahlregelbaren Antrieb versehen.

Es ist aber auch möglich, über eine der Heizeinrichtung zugeordnete Bypaßleitung B mit einem entsprechend ansteuerbaren Stellventil V die durch die Heizeinrichtung 7 zu führende Menge an Wärmeträgermittel entsprechend dem geforderten Heizbedarf zu führen, wenn die Pumpe P einen Konstantantrieb aufweist.

In beiden Fällen erfolgt die Ansteuerung der Pumpe P bzw. des Stellventils V über die Steuereinrichtung 9, durch die auch die Umschaltung von elektrischem Heizbetrieb auf den Heizbetrieb mit Abgaswärme erfolgt.

Auch ein Mischbetrieb ist denkbar, und zwar in der Weise, daß über die Abgaswärme eine Erwärmung des Reduktionsmittels auf eine Temperatur im Bereich der Verdampfungstemperatur erfolgt, so daß mit einem geringen Aufwand an elektrischer Energie die jeweils für den Betrieb benötigten Mengen an Reduktionsmitteldampf zur Verfügung gestellt werden können. Hierdurch wird für die Beheizung durch Abgaswärme kein Regelaufwand benötigt, da man den Wärmetauscher WT an einer Stelle der Abgasleitung 1 anordnen kann, die in etwa das geforderte Temperaturniveau aufweist und unter Berücksichtigung der Übertragungswirkungsgrade zu der gewünschten Heiztemperatur an der Heizeinrichtung führt. Über die elektrische Heizung lassen sich dann Schwankungen in der Temperaturlage der Abgase einfacher ausregeln. Insgesamt wird der Bedarf an elektrischer Energie reduziert.

Zweckmäßig ist es, wenn eine derartige Grundbeheizung nicht nur über die Heizeinrichtung 7 sondern auch über die Beheizung 24 erfolgt.

Beim Kaltstart muß die notwendige Heizenergie voll über elektrische Energie zur Verfügung gestellt werden, die erst bei einem Anstieg der Abgastemperaturen entsprechend durch Heizenergie aus der Abgaswärme substituiert werden kann.

## Patentansprüche

**1.** Einrichtung zur Erzeugung eines gasförmigen Reduktionsmittels aus einem Reduktionsmittelpreßkörper (6) zur Einleitung in ein katyltisch zu reinigendes Abgas, mit einem druckdicht verschließbaren Aufnahmebehälter (5) für den Preßkörper (6), der im Bodenbereich mit einer Heizeinrichtung (7) und einem damit verbundenen Gassammelraum (8) versehen ist, mit einem an den Gassammelraum angeschlossenen Dosierventil (10), dessen Ventilöffnung in eine Reaktionskammer (11) zur thermischen Umsetzung des gasförmigen Reduktionsmittels in gasförmige reduktive Produkte mündet, die mit der Abgasleitung (1) in Verbindung steht.

**2.** Einrichtung nach Anspruch 1, dadurch gekennzeichnet, daß die Heizeinrichtung (7) eine beheizbare Bodenplatte aufweist, mit der wärmeleitend eine mit Durchtrittsöffnungen versehene Kontaktfläche (7.2) für den Preßkörper (6) zumindest teilweise mit Abstand den Gassammelraum (8) bildend verbunden ist.

**3.** Einrichtung nach Anspruch 1 oder 2, dadurch gekennzeichnet, daß die Oberfläche der Kontaktfläche (7.2) größer ist als die Fläche der Bodenplatte.

**4.** Einrichtung nach einem der Ansprüche 1 bis 3, dadurch gekennzeichnet, daß die Reaktionskammer (11) durch eine Bypaßleitung (11.1) zur Abgasleitung (1) gebildet wird.

**5.** Einrichtung nach einem der Ansprüche 1 bis 4, dadurch gekennzeichnet, daß in der Bypaßleitung (11.1), vorzugsweise in Strömungsrichtung der Abgase gesehen, vor der Einmündung (14) der Ventilöffnung eine Zusatzheizeinrichtung (13) zur Aufheizung der Abgase zugeordnet ist.

**6.** Einrichtung nach einem der Ansprüche 1 bis 5, dadurch gekennzeichnet, daß in der Bypaßleitung (11.1) - in Strömungsrichtung der Abgase gesehen - hinter der Einmündung (14) der Ventilöffnung ein Hydrolysekatalysator (15) angeordnet ist.

**7.** Einrichtung nach einem der Ansprüche 1 bis 6, dadurch gekennzeichnet, daß die Bypaßleitung (11.1) zuflussseitig einen Pulsationsdämpfer (12) aufweist.

**8.** Einrichtung nach einem der Ansprüche 1 bis 7, dadurch gekennzeichnet, daß der Aufnahmebehälter (5) mit einer nach außen wirkenden Wärmeisolierung versehen ist.

**9.** Einrichtung nach einem der Ansprüche 1 bis 8, dadurch gekennzeichnet, daß der Aufnahmebehälter (5) mit einer auf den Innenraum wirkenden Beheizung (17; 24) versehen ist.

**10.** Einrichtung nach einem der Ansprüche 1 bis 9, dadurch gekennzeichnet, daß der Aufnahmebehälter (5) eine Füllöffnung (5.1) aufweist, die mit einem abnehmbaren Deckel (5.2) druckdicht verschließbar ist.

**11.** Einrichtung nach einem der Ansprüche 1 bis 10. dadurch gekennzeichnet, daß die Füllöffnung (5.1) auf der der Heizeinrichtung (7) abgekehrten Seite des Aufnahmebehälters (5) angeordnet ist.

**12.** Einrichtung nach einem der Ansprüche 1 bis 11, dadurch gekennzeichnet, daß der Heizeinrichtung (7) im Aufnahmebehälter (5) ein Aschesammelraum (22) zugeordnet ist.

**13.** Einrichtung nach einem der Ansprüche 1 bis 12, dadurch gekennzeichnet, daß der Aschesammelraum (22) mit einer Absaugleitung in Verbindung steht.

**14.** Einrichtung nach einem der Ansprüche 1 bis 13, dadurch gekennzeichnet, daß der Aschesammelraum (22) herausnehmbar in den Aufnahmebehälter (5) eingesetzt ist.

**15.** Einrichtung nach einem der Ansprüche 1 bis 14, dadurch gekennzeichnet, daß der Aschesammelraum (22) mit dem Deckel (5.2) verbunden ist.

**16.** Einrichtung nach einem der Ansprüche 1 bis 15, dadurch gekennzeichnet, daß die auf den Innenraum wirkende Beheizung (24) mit dem Deckel (5.2) verbunden ist.

**17.** Einrichtung nach einem der Ansprüche 1 bis 16, dadurch gekennzeichnet, daß die Beheizung (24) zur Behälterwandung mit einer Wärmeisolierung (25) abgedeckt ist.

**18.** Einrichtung nach einem der Ansprüche 1 bis 17, dadurch gekennzeichnet, daß ein rohrförmiges wärmeleitendes Führungsteil (23) für den Preßkörper (6) vorgesehen ist, das in Kontakt mit der Beheizung (17; 24) steht.

**19.** Einrichtung nach einem der Ansprüche 1 bis 18, dadurch gekennzeichnet, daß das Führungsteil (23) mit dem Deckel (5.2) verbunden ist.

**20.** Einrichtung nach einem der Ansprüche 1 bis 19, dadurch gekennzeichnet, daß das Führungsteil (23) mit der Beheizung (24) und der Wärmeisolierung (25) verbunden ist.

**21.** Einrichtung nach einem der Ansprüche 1 bis 20, dadurch gekennzeichnet, daß der Aschesammelraum (22) am freien Ende des Führungsteils (23) angeordnet ist.

**22.** Einrichtung nach einem der Ansprüche 1 bis 21, dadurch gekennzeichnet, daß der Preßkörper (6) in einer in den Führungsreil einsetzbaren Kartusche (26; 27) aus wärmeleitendem Material enthalten ist.

**23.** Einrichtung nach einem der Ansprüche 1 bis 22, dadurch gekennzeichnet, daß das Führungsteil (23) an seinem der Heizeinrichtung (7) zugeordneten Ende mit verschwenkbaren Haltenasen für einen eingesetzten Preßkörper (6) versehen ist, die diesen fixieren und beim Einsetzen des Führungsteils (23) in den Aufnahmebehälter (5) den Preßkörper (6) freigeben.

**24.** Einrichtung nach einem der Ansprüche 1 bis 23, dadurch gekennzeichnet, daß insbesondere bei einem als Kartusche (26) ausgebildeten Führungsteil ein mit dem Preßkörper (6) verbundenes verschiebbares Bodenteil (6.1) vorgesehen ist.

**25.** Einrichtung nach einem der Ansprüche 1 bis 24, dadurch gekennzeichnet, daß das Bodenteil (6.1) mit Sperrrasten (6.2) versehen ist, die einen Vorschub nur in Richtung auf die Heizeinrichtung (7) zulassen.

**26.** Einrichtung nach einem der Ansprüche 1 bis 25, dadurch gekennzeichnet, daß die Kartusche als zusammendrückbarer Faltenbalg (27) ausgebildet ist.

**27.** Einrichtung nach einem der Ansprüche 1 bis 26, dadurch gekennzeichnet, daß das Dosierventil (10) einen Durchlaßkanal (18) aufweist, der zulaufseitig mit dem Gassammelraum (8) in Verbindung steht und der ablaufseitig als Ventilsitz (30) ausgebildet ist und in einen Überströmraum (31) mündet, dessen Austrittsöffnung in die Reaktionskammer (11) mündet, daß im Überströmraum (31) ein Ventilkörper (32) hin und her bewegbar gehalten ist, dessen Spitze (33) am Ventilsitz (30) dichtend andrückbar ist und der sich auf einer elastischen Membran (34) abstützt, und daß auf der anderen Seite der Membran (34) ein mit einer Schließfeder (35) verbundenes Stellelement (36) angeordnet ist, das mit dem Ventilkörper (32) über der Membran (34) in Wirkverbindung steht und dem ein Aktuator (37) zugeordnet ist.

**28.** Einrichtung nach einem der Ansprüche 1 bis 27, dadurch gekennzeichnet, daß der Ventilkörper (32) mit einer Öffnerfeder (40) in Verbindung steht.

**29.** Einrichtung nach einem der Ansprüche 1 bis 28, dadurch gekennzeichnet, daß die Kraft der Schließfeder (33) größer ist als die Kraft der Öffnerfeder (40).

**30.** Einrichtung nach einem der Ansprüche 1 bis 29, dadurch gekennzeichnet, daß der Überhitzer (19) am Dosierventil (10) den Bereich des Durchlasskanals (18) abdeckt.

**32.** Einrichtung nach einem der Ansprüche 1 bis 30, dadurch gekennzeichnet, daß der Ventilkörper (32) mit einer Öffnerfeder (40) in Verbindung steht.

**32.** Einrichtung nach einem der Ansprüche 1 bis 31, dadurch gekennzeichnet, daß die Kraft der Schließfeder (33) größer ist als die Kraft der Öffnerfeder (40).

**33.** Einrichtung nach einem der Ansprüche 1 bis 30, dadurch gekennzeichnet, da0 der Überhitzer (19) am Dosierventil (10) den Bereich des Durchlaßkanals (18) abdeckt.

**34.** Einrichtung nach einem der Ansprüche 1 bis 33, dadurch gekennzeichnet, daß zumindest die Heizeinrichtung (7) im Bodenbereich des Aufnahmebehälters (5) wahlweise mit elektrischer Energie und/oder aus den Abgasen entnommener Wärmeenergie beaufschlagt wird.
